# EUROPEAN PATENT APPLICATION

(11) **EP 1 236 746 A1**
(43) Date of publication of application: **04.09.2002**
(21) Application number: 02003680.2
(22) Date of filing: 18.02.2002
(51) Int. Cl.: C08F 214/18, C08F 214/26, C08F 218/08, C08F 210/02

(54) **Fluorine-containing copolymer, composition and laminate**

(30) Priority: 28.02.2001 JP 2001055222
(71) Applicant: Asahi Glass Co., Ltd., Tokyo 100-8405 (JP)
(72) Inventor: Funaki, Atsushi, Ichihara-shi, Chiba (JP); Hamazaki, Kazuo, Ichihara-shi, Chiba (JP); Katayama, Hajime, Ichihara-shi, Chiba (JP); Nishi, Eiichi, Saiwai-ku, Kawasaki-shi, Kanagawa (JP); Yodogawa, Masahide, Saiwai-ku, Kawasaki-shi, Kanagawa (JP); Asakura, Junko, Kanagawa-ku, Yokohama-shi, Yanagawa (JP)
(74) Representative: Müller-Boré & Partner Patentanwälte

(57) **Abstract**

A fluorine-containing copolymer containing polymer units (A) based on tetrafluoroethylene or chlorotrifluoroethylene, polymer units (B) based on ethylene, polymer units (C) based on vinyl acetate and polymer units (D) based on a compound represented by the general formula CH₂=CX(CF₂)ₙY wherein each of X and Y which are independent of each other, is a hydrogen atom or a fluorine atom, and n is an integer of from 2 to 10, wherein (A)/(B) is from 20/80 to 80/20 in a molar ratio, (C)/((A)+(B)) is from 1/1,000 to 15/100 in a molar ratio, (D)/((A)+(B)) is from 1/1,000 to 15/100 in a molar ratio, and the volumetric rate of flow is from 1 to 1,000 mm³/sec.

## Description

The present invention relates to a fluorine-containing copolymer excellent in adhesive properties with a non-fluorine type polymer and a laminate containing it.

Fluorine-containing polymers such as polytetrafluoroethylene, a tetrafluoroethylene/perfluoro(alkyl vinyl ether) type copolymer and an ethylene/tetrafluoroethylene type copolymer (hereinafter referred to as ETFE) have excellent properties such as heat resistance, chemical resistance, weather resistance and gas barrier properties and are useful in various fields such as semiconductor industry and automobile industry. Along with broadening of applications, development of fluorine-containing polymers having more excellent properties such as rigidity and strength higher than those of a usual one has been required. As one of development means, a method of laminating a fluorine-containing polymer and a non-fluorine type polymer may be mentioned.

The fluorine-containing polymer is usually subjected to a surface treatment by means of e.g. a treatment with a chemical, a corona discharge treatment or a plasma discharge treatment to introduce various adhesive functional groups to the surface, and is laminated with another material by means of an adhesive as the case requires. However, with such a lamination method, the steps are complicated and the productivity tends to be low. Accordingly, it is desired to obtain a laminated film or a laminated hose by means of an easier forming method such as coextrusion without surface treatment of the fluorine-containing polymer.

Under these circumstances, it is an object of the present invention to provide a fluorine-containing copolymer and a fluorine-containing copolymer composition which are excellent in adhesive properties with a non-fluorine type polymer and which give a laminate by means of coextrusion, and a laminate comprising a fluorine-containing copolymer and a non-fluorine type polymer strongly bonded to each other.

The present invention provides a fluorine-containing copolymer containing polymer units (A) based on tetrafluoroethylene or chlorotrifluoroethylene, polymer units (B) based on ethylene, polymer units (C) based on vinyl acetate and polymer units (D) based on a compound represented by the general formula CH₂=CX(CF₂)ₙY wherein each of X and Y which are independent of each other, is a hydrogen atom or a fluorine atom, and n is an integer of from 2 to 10, wherein (A)/(B) is from 20/80 to 80/20 in a molar ratio, (C)/((A)+(B)) is from 1/1,000 to 15/100 in a molar ratio, (D)/((A)+(B)) is from 1/1,000 to 15/100 in a molar ratio, and the volumetric rate of flow is from 1 to 1,000 mm³/sec.

The present invention further provides a fluorine-containing copolymer which is obtained by blending from 0.01 to 10 parts of an organic peroxide with 100 parts of the above fluorine-containing copolymer, followed by a heat treatment, and a laminate which comprises a layer of the above fluorine-containing copolymer and a layer of a non-fluorine type polymer. Here, in the present specification, "part(s)" means "part(s) by mass".

Now, the present invention will be described in detail with reference to the preferred embodiments.

In the present invention, the molar ratio of the polymer units (A) based on tetrafluoroethylene (hereinafter referred to as TFE) or chlorotrifluoroethylene (hereinafter referred to as CTFE) to the polymer units (B) based on ethylene (hereinafter referred to as E) is from 20/80 to 80/20, preferably from 50/50 to 70/30. If the molar ratio (A)/(B) is too low, the heat resistance, weather resistance, chemical resistance, gas barrier properties, etc., of the fluorine-containing copolymer tend to be low, and if the molar ratio is too high, the mechanical strength, melt processability, etc. tend to be low. TFE and CTFE may be used alone or they may be used together.

In the fluorine-containing copolymer of the present invention, the content of the polymer units (C) based on vinyl acetate (hereinafter referred to as VOAc) is such that (C)/((A)+(B)) is from 1/1,000 to 15/100 in a molar ratio, preferably from 1/100 to 1/10. If the content of (C) is too low, the adhesive properties between the fluorine-containing copolymer and the non-fluoropolymer tend to be low, and if the content is too high, the heat resistance, oil resistance, chemical resistance, etc. tend to be low.

In the fluorine-containing copolymer of the present invention, the content of the polymer units (D) based on the compound represented by the general formula CH₂=CX(CF₂)ₙY (hereinafter referred to as FAE) is such that (D)/((A)+(B)) is from 1/1,000 to 15/100 in a molar ratio, preferably from 1/1,000 to 3/100. If the content of (D) is too low, the crack resistance tends to be low, whereby breakage of the fluorine-containing copolymer such as fracture is likely to take place under a stress, and if the content is too high, the strength of the fluorine-containing copolymer tends to be low.

FAE is, as mentioned above, a compound represented by the general formula CH₂=CX(CF₂)ₙY wherein each of X and Y which are independent of each other, is a hydrogen atom or a fluorine atom, and n is an integer of from 2 to 10. As FAE, a compound represented by CH₂=CF(CF₂)ₙY such as CH₂=CF(CF₂)₄F, CH₂=CF(CF₂)₅F or CH₂=CF(CF₂)₅H may be used, but preferred is a compound represented by CH₂=CH(CF₂)ₙY such as CH₂=CH(CF₂)₃F, CH₂=CH(CF₂)₄F, CH₂=CH(CF₂)₄H, CH₂=CH(CF₂)₅F or CH₂=CH(CF₂)₈F, more preferred is a compound represented by CH₂=CH(CF₂)ₘF wherein m is an integer of from 2 to 8.

The fluorine-containing copolymer of the present invention has a volumetric rate of flow (hereinafter referred to as Q value) of from 1 to 1,000 mm³/sec. The Q value is an index indicating the melt fluidity of the fluorine-containing copolymer, and is a measure of the molecular weight. A high Q value indicates a low molecular weight, and a low Q value indicates a high molecular weight. The Q value in the present invention is an extrusion rate when the fluorine-containing copolymer is extruded into an orifice having a diameter of 2.1 mm and a length of 8 mm by means of a flow tester manufactured by Shimadzu Corporation at a temperature of 297°C with a load of 7 kg. If the Q value is too low, extrusion tends to be difficult, and if it is too high, mechanical strength of the fluorine-containing copolymer tends to be low. The Q value is preferably from 10 to 500 mm³/sec.

The fluorine-containing copolymer of the present invention preferably has a molding temperature close to the molding temperature of the non-fluorine type polymer so that it can be coextruded with the non-fluorine type polymer. Accordingly, it is preferred to optimize the molding temperature of the fluorine-containing copolymer by suitably adjusting the contents of (A), (B), (C) and (D) within the above ranges.

The method for producing the fluorine-containing copolymer of the present invention is not particularly limited, and a polymerization method of using a commonly used radical polymerization initiator may be employed. The polymerization method may, for example, be a bulk polymerization, a solution polymerization employing an organic solvent such as fluorohydrocarbon, chlorohydrocarbon, chlorofluorohydrocarbon, an alcohol or a hydrocarbon, a suspension polymerization using an aqueous medium and an appropriate organic solvent as the case requires, or an emulsion polymerization using an aqueous medium and an emulsifying agent.

The radical polymerization initiator has a decomposition temperature at which the half life is 10 hours of preferably from 0 to 100°C, more preferably from 20 to 90°C. Specific examples of which include azo compounds such as azobisisobutylonitrile, non-fluorine type diacyl peroxides such as isobutyryl peroxide, octanoyl peroxide, benzoyl peroxide and lauroyl peroxide, peroxydicarbonates such as diisopropylperoxydicarbonate, peroxy esters such as tert-butylperoxy pivalate, tert-butylperoxy isobutyrate and tert-butylperoxy acetate, fluorine-containing diacylperoxides such as a compound represented by (Z(CF₂)ₚCOO)₂ wherein Z is a hydrogen atom, a fluorine atom or a chlorine atom, and p is an integer of from 1 to 10, and inorganic peroxides such as potassium persulfate, sodium persulfate and ammonium persulfate.

The polymerization conditions are not particularly limited, and the polymerization temperature is preferably from 0 to 100°C, more preferably from 20 to 90°C. The polymerization pressure is preferably from 0.1 to 10 MPa, more preferably from 0.5 to 3 MPa. The polymerization time is preferably from 1 to 30 hours.

A fluorine-containing copolymer composition obtained by blending an organic peroxide with the fluorine-containing copolymer of the present invention, followed by a heat treatment (also referred to as a fluorine-containing copolymer degenerated product, a fluorine-containing copolymer compound or a fluorine-containing copolymer blended product) has further improved adhesive properties with the non-fluorine type polymer as compared with the fluorine-containing copolymer.

The organic peroxide to be used in the present invention has a decomposition temperature at which the half life is 1 minute of preferably from 150 to 280°C, more preferably from 170 to 240°C. Specific examples of which include aliphatic peroxides such as 2,5-dimethyl-2,5-bis(tert-butyl peroxy)hexane, di-tert-butyl peroxide and 2,5-dimethyl-2,5-bis(tert-butylperoxy)hexyne-3, aromatic peroxides such as 1,4-bis(α-tert-butylperoxyisopropyl)benzene, tert-butyl=cumyl=peroxide and dicumyl peroxide, ketone peroxides such as methyl ethyl keton peroxide, diacyl peroxides such as benzoyl peroxide, peroxy dicarbonates such as diisopropyl peroxy dicarbonate, alkyl peroxy esters such as tert-butylperoxy isobutyrate and hydroperoxides such as tert-butyl hydroperoxide.

The organic peroxide may be used in a liquid state or a solid state. The amount of the organic peroxide is from 0.01 to 10 parts, preferably from 0.1 to 5 parts, based on 100 parts of the fluorine-containing copolymer.

As the method for blending the organic peroxide with the fluorine-containing copolymer and conducting a heat treatment, preferred is a method of mixing the powdery or granular fluorine-containing copolymer with the organic peroxide by means of a mixer, followed by melt extrusion. By this method, simultaneously with blending of the organic peroxide with the fluorine-containing copolymer, the mixture is subjected to a heat treatment, whereby a fluorine-containing copolymer composition in the form of pellets can be obtained. The heat treatment temperature is preferably from 150 to 280°C, more preferably from 220 to 280°C, which is at least the melting point of the fluorine-containing copolymer. The heat treatment time is preferably short, more preferably from 0.1 to 30 minutes, furthermore preferably from 0.5 to 10 minutes.

A uniaxial or biaxial extruder is preferably used for melt extrusion. The cylinder temperature of the extruder is preferably from 100 to 350°C, and the cross head temperature and the die temperature are preferably from 200 to 350°C, respectively. The number of revolutions of the screw is not particularly limited but is preferably from 10 to 200 revolutions/min. The residence time of the fluorine-containing copolymer in the extruder is preferably from 1 to 10 minutes. The discharge hole of the die preferably has a diameter of from 2 to 20 mm. The fluorine-containing copolymer in the form of a string melted and disintroduced from the discharge hole is cooled and solidified with water or air while being stretched, and cut by a cutter to obtain cylindrical pellets having a length of from 1 to 5 mm and a diameter of from 1 to 5 mm.

Further, in the present invention, a grafted fluorine-containing copolymer composition obtained by blending, in addition to the organic peroxide, a compound having a bonding group capable of being grafted and a functional group imparting adhesive properties (hereinafter referred to as a compound to be grafted) with the fluorine-containing copolymer, followed by a heat treatment, is preferred, since the adhesive properties with the non-fluorine-type polymer improve to the same level as the above fluorine-containing copolymer composition or above, as compared with the fluorine-containing copolymer. By such a heat treatment, a compound to be grafted is grafted to the fluorine-containing copolymer.

By such grafting, the functional group imparting adhesive properties is introduced to the fluorine-containing copolymer. The functional group imparting adhesive properties is a group having reactivity or polarity, and a carboxyl group, a residue obtained by dehydration condensation of two carboxyl groups in one molecule (hereinafter referred to as a carboxylic anhydride residue), an epoxy group, a hydroxyl group, an isocyanate group, an ester group, an amide group, an aldehyde group, an amino group, a hydrolyzable silyl group, a cyano group, a carbon-carbon double bond, a sulfonic acid group and an ether group may, for example, be mentioned as preferred examples. Among them, preferred are a carboxyl group, a carboxylic anhydride residue, an epoxy group, a hydrolyzable silyl group and a carbon-carbon double bond. Different types of such functional groups more than two may be present in one molecule of the fluorine-containing copolymer, or functional groups more than two may be present in one molecule.

Further, the compound to be grafted is a compound having the above functional group such as a carboxyl group, and a bonding group such as an organic group having a reactive unsaturated double bond, a peroxy group or an amino group. It may, for example, be an unsaturated carboxylic acid, an epoxy group-containing unsaturated compound, a hydrolyzable silyl group-containing unsaturated compound or an epoxy group-containing peroxy compound. Preferred is an unsaturated carboxylic anhydride such as maleic anhydride or fumaric anhydride, and more preferred is maleic anhydride. The compound to be grafted is used preferably in an amount of from 0.01 to 100 parts by mass, more preferably from 0.01 to 10 parts by mass, based on 100 parts by mass of the fluorine-containing copolymer.

The laminate of the present invention comprises a layer (E) of the above fluorine-containing copolymer, the above fluorine-containing copolymer composition or the above grafted fluorine-containing copolymer composition and a layer (F) of a non-fluorine type polymer. It may, for example, be a multilayer laminate such as a (E)/(F) laminate consisting of two layers of (E) and (F), a (G)/(E)/(F) laminate consisting of three layers, obtained by further laminating a layer (G) of a fluorine-containing polymer on (E) and (F), or a (G)/(E)/(F)/(F) laminate wherein the number of layers is further increased. Here, it is important that (E) and (F) are laminated so that they are directly in contact with each other, whereby a strongly bonded laminate can be obtained.

Such a laminate is preferably obtained by coextrusion of the fluorine-containing copolymer composition, the fluorine-containing copolymer composition or the grafted fluorine-containing copolymer composition, and the non-fluorine type polymer. The coextrusion is usually a method to obtain a laminate of at least two layers in a form of e.g. a film or a tube. Melted products disintroduced from discharge holes of at least two extruders are passed through a die while being contacted with each other in a molten state and formed into a laminate. With respect to the extrusion temperature, the screw temperature is preferably from 100 to 350°C, and the die temperature is preferably from 200 to 350°C. The number of revolutions of the screw is not particularly limited, but is preferably from 10 to 200 revolutions/min. The residence time of the melted product in the extruder is preferably from 1 to 20 minutes.

According to the present invention, a laminate can be obtained wherein the layer of the fluorine-containing copolymer and the layer of the non-fluorine type polymer are strongly bonded. The mechanism why the adhesive properties between the two layers are excellent is not clear, but is considered as follows. The fluorine-containing copolymer contains (C) having an ester linkage, which has a higher polarity as compared with (A), (B) and (D), and thereby has improved adhesive properties with the non-fluorine type polymer. Further, when the organic peroxide is blended with the fluorine-containing copolymer, followed by a heat treatment, the organic peroxide decomposes and the fluorine-containing copolymer undergoes a certain degeneration, and as a result, the adhesive properties between the fluorine-containing copolymer composition and the non-fluorine type polymer further improve. Further, the grafted fluorine-containing copolymer composition to which the compound to be grafted is grafted, has an adhesive functional group, and accordingly it is considered to have further improved adhesive properties with the non-fluorine type polymer.

The non-fluorine type polymer to be used for the laminate with the fluorine-containing copolymer composition or the fluorine-containing copolymer of the present invention may, for example, be a polyamide such as polyamide 6, polyamide 66, polyamide 46, polyamide 11, polyamide 12 or polyamide MXD6 (semi-aromatic polyamide), a polyester such as polyethylene terephthalate, polybutylene terephthalate, polyethylene naphthalate or polybutylene naphthalate, polyethylene, poly(ethylene/vinyl acetate), polypropylene, polystyrene, polyvinylidene chloride, polyvinyl acetate, polyvinyl alcohol, poly(ethylene/vinyl alcohol), polyacrylonitrile, polyoxymethylene, polyphenylene sulfide, polyphenylene ether, polycarbonate, polyamideimide, polyether imide, polysulfone or polyarylate.

More preferred as the non-fluorine type polymer is a polyamide such as polyamide 6, polyamide 66, polyamide 46, polyamide 11, polyamide 12 or polyamide MXD6, a polyester such as polyethylene terephthalate, polybutylene terephthalate, polyethylene naphthalate or polybutylene naphthalate or polyvinylidene chloride, poly(ethylene/vinyl alcohol) or polyacrylonitrile.

Most preferred as the non-fluorine type polymer is polyamide 6, polyamide 66, polyamide 46, polyamide 11, polyamide 12 or polyamide MXD6.

As applications of the fluorine-containing copolymer, the fluorine-containing copolymer composition, the grafted fluorine-containing copolymer composition and the laminate of the present invention, fuel hoses for automobiles, industrial multilayer hoses, multilayer hoses for food, weather resistant multilayer films, chemical resistant linings, weather resistant linings and adhesives for a fluorine-containing polymer and a non-fluorine type polymer, may, for example, be mentioned.

Now, the present invention will be described in detail with reference to Examples 1 to 3 and 7, and Comparative Examples 4 to 6. However, it should be understood that the present invention is by no means restricted to such specific Examples.

Here, MIT folding endurance test was carried out as follows.

### MIT folding endurance test

Measurement was carried out in accordance with ASTM D2176. Namely, a test specimen having a width of 12.5 mm, a length of 130 mm and a thickness of 0.23 mm was attached to an MIT measuring apparatus manufactured by Toyo Seiki Seisaku-sho, Ltd., and the test specimen was folded from side to side with a load of 1.25 kg with a folding angle of 135° on each side with a folding number of 175 times/min, and the folding number until the test specimen was broken was measured. This test is a test for resistance to fatigue from folding of the fluorine-containing copolymer and is an index indicating crack resistance. A greater number indicates more excellent crack resistance.

### EXAMPLE 1

An autoclave of 430 ℓ equipped with a stirrer was deaerated, 314 kg of 1-hydrotridecafluorohexane, 105 kg of 1,3-dichloro-1,1,2,2,3-pentafluoropropane (manufactured by Asahi Glass Company, Limited, hereinafter referred to as AK225cb), 0.506 kg of VOAc, 0.184 kg of (perfluorobutyl)ethylene CH₂=CH(CF₂)₄F (hereinafter referred to as PFBE), 13.0 kg of TFE and 0.69 kg of E were introduced thereinto, and the inside of the autoclave was heated to 74°C.

As a polymerization initiator, 20 mℓ of a mixed solution of tert-butylperoxy pivalate (decomposition temperature of 54.6°C at which the half life is 10 hours) and AK225cb in a mass ratio of 1:1 was introduced to initiate the polymerization. The pressure in the autoclave decreased along with progress of the polymerization, and thus a mixed gas of TFE/E=60/40 (molar ratio) was continuously introduced so as to keep the pressure constant. Further, VOAc was continuously introduced in an amount corresponding to 5 mol% based on the total number of moles of TFE and E to be introduced during the polymerization. Introduction of VOAc was terminated when the total amount of TFE and E introduced during the polymerization reached 28 kg. When the polymerization proceeded and the total amount of TFE and E introduced during the polymerization reached 36 kg, the temperature in the inside of the autoclave was cooled to room temperature, and at the same time, unreacted TFE and E were purged to normal pressure.

The obtained fluorine-containing copolymer a in the form of a slurry was introduced to a granulation tank of 800 ℓ having 300 kg of water introduced therein, and the temperature was increased to 105°C with stirring for granulation while removing the solvent by distillation. The obtained granules were dried at 135°C for 3 hours to obtain 38 kg of a granulated product a of the fluorine-containing copolymer a.

From results of the fusion NMR analysis and the fluorine content analysis, the composition of the fluorine-containing copolymer a was such that the molar ratio of polymer units based on TFE/E/VOAc/PFBE was 60/40/5.0/0.15. The Q value was 310 mm³/sec, and the MIT folding number was 8,500 times.

The granulated product a was melt-kneaded by means of an extruder at 260°C for a residence time of 2 minutes to obtain pellets a. ETFE (ETFE containing no polymer units based on VOAc: Aflon LM730A, manufactured by Asahi Glass Company, Limited) was supplied to a cylinder for formation of the base layer, nylon 6 (1022B, manufactured by Ube Industries, Ltd.) was supplied to a cylinder for formation of an upper layer, and the pellets a were supplied to a cylinder for formation of an interlayer, and they were transported to transport zones of the respective cylinders. The heating temperatures of ETFE, nylon 6 and pellets a at the transport zones were 290°C, 260°C and 260°C, respectively. Three-layer coextrusion was carried out at a temperature of a coextrusion die of 270°C to form a laminated sheet consisting of three-layers of ETFE/fluorine-containing copolymer a/nylon 6 having a thickness of 1 mm and a width of 10 cm. The thicknesses of the ETFE layer, the fluorine-containing copolymer a layer and the nylon 6 layer were 0.3 mm, 0.2 mm and 0.5 mm, respectively.

The obtained three-layer laminated sheet was cut to obtain a test specimen having a width of 1 cm and a length of 10 cm, and the peel strength between layers was measured by using the test specimen. The fluorine-containing copolymer a layer and the ETFE layer could not be separated off, they underwent partial material breakage and showed a high adhesive force. The peel strength between the fluorine-containing copolymer a layer and the nylon 6 layer was 25.4 N/cm.

### EXAMPLE 2

38 kg of a fluorine-containing copolymer b was obtained in the same manner as in Example 1 except that the amount of PFBE introduced was 0.55 kg. Further, a granulated product b was obtained from the fluorine-containing copolymer b in the same manner as in Example 1. As a result of the fusion NMR analysis and the fluorine content analysis, the composition of the fluorine-containing copolymer b was such that the molar ratio of polymer units based on TFE/E/VOAc/PFBE was 60/40/5.0/0.5. The Q value was 340 mm³/sec, and the MIT folding number was 15,300 times.

Pellets b were obtained by using the granulated product b in the same manner as in Example 1. Electrically conductive ETFE (Aflon LM CB4015L, manufactured by Asahi Glass Company, Limited) was supplied to a cylinder for formation of a base layer, nylon 12 (3030 JLX2, manufactured by Ube Industries, Ltd.) was supplied to a cylinder for formation of an upper layer, and pellets b were supplied to a cylinder for formation of an interlayer, and they were transported to transport zones of the respective cylinders. The heating temperatures of ETFE, nylon 12 and pellets b at the transport zones were 310°C, 240°C and 260°C, respectively. Three-layer coextrusion was carried out at a temperature of a coextrusion die of 260°C to form a laminated tube consisting of three layers of electrically conductive ETFE/fluorine-containing copolymer b/nylon 12. The laminated tube had an outer diameter of 8 mm, an inner diameter of 6 mm and a thickness of 1 mm, and the thicknesses of the electrically conductive ETFE layer, the fluorine-containing copolymer b layer and the nylon 12 layer were 0.2 mm, 0.1 mm and 0.7 mm, respectively.

The peel strength between layers was measured in the same manner as in Example 1. The fluorine-containing copolymer b layer and the electrically conductive ETFE layer could not be separated off, they underwent partial material breakage and showed a high adhesive force. The peel strength between the fluorine-containing copolymer b layer and the nylon 12 layer was 32.5 N/cm.

The obtained three-layer laminated tube was soaked in CE10 (an alcohol mixed fuel of isooctane/toluene/ethanol in a volume% of 45/45/10) at 60°C for 240 hours. After the soaking, the peel strength between layers was measured. The fluorine-containing copolymer b layer and the electrically conductive ETFE layer were not separated off and showed a high adhesive force. The peel strength between the fluorine-containing copolymer b layer and the nylon 12 layer was 30.5 N/cm.

### EXAMPLE 3

1.5 Parts of di-tert-butylperoxide (decomposition temperature of 185.9°C at which the half life is 1 minute) was uniformly mixed with 100 parts of the granulated product a obtained in Example 1, followed by melt kneading by means of a biaxial extruder at 260°C for a residence time of 3 minutes to obtain pellets c of the fluorine-containing copolymer composition a having an organic peroxide blended and subjected to a heat treatment. By using the pellets c, a three-layer coextruded laminated sheet was formed in the same manner as in Example 1. The thicknesses of the ETFE layer, the heat treated fluorine-containing copolymer composition a layer and the nylon 6 layer were 0.05 mm, 0.02 mm and 0.13 mm, respectively.

The peel strength between layers was measured in the same manner as in Example 1. The heat treated fluorine-containing copolymer composition a layer and the ETFE layer could not be separated off, they underwent partial material breakage and showed a high adhesive force. The peel strength between the heat treated fluorine-containing copolymer composition a layer and the nylon 6 layer was 37.6 N/cm.

### EXAMPLE 4 (COMPARATIVE EXAMPLE)

38.5 kg of a fluorine-containing copolymer c was obtained in the same manner as in Example 1 except that no PFBE was introduced. As a result of the fusion NMR analysis and the fluorine content analysis, the composition of the fluorine-containing copolymer c was such that the molar ratio of TFE/E/VOAc was 60/40/5.0. The Q value was 280 mm³/sec, and the MIT folding number was 1,500 times.

### EXAMPLE 5 (COMPARATIVE EXAMPLE)

A laminated sheet consisting of three layers of electrically conductive ETFE/ETFE/nylon 12 was formed in the same manner as in Example 2 except that ETFE (Aflon LM730A, manufactured by Asahi Glass Company, Limited) was used instead of the pellets b. The thicknesses of the electrically conductive ETFE layer, the ETFE layer and the nylon 12 layer were 0.3 mm, 0.2 mm and 0.5 mm, respectively.

The peel strength between layers was measured in the same manner as in Example 2. The electrically conductive ETFE layer and the ETFE layer could not be separated off, they underwent partial material breakage and showed a high adhesive force. On the other hand, the peel strength between the ETFE layer and the nylon 12 layer was 1 N/cm, and the adhesive force between them was low.

### EXAMPLE 6 (COMPARATIVE EXAMPLE)

A laminated tube consisting of three layers of ETFE/ETFE/nylon 6 was obtained in the same manner as in Example 1 except that ETFE (Aflon LM730A, manufactured by Asahi Glass Company, Limited) was used instead of the pellets a. The thicknesses of the ETFE layer, the intermediate ETFE layer and the nylon 6 layer were 0.2 mm, 0.1 mm and 0.7 mm, respectively.

The peel strength between layers was measured in the same manner as in Example 1. The ETFE layer and the ETFE layer could not be separated off, they underwent partial material breakage and accordingly it was found that they were strongly bonded. On the other hand, the peel strength between the intermediate ETFE layer and the nylon 6 layer was 1 N/cm, and the adhesive force between them was low.

### EXAMPLE 7

1.5 Parts of di-tert-butylperoxide and 0.08 parts of maleic anhydride were uniformly mixed with 100 parts of the granulated product a obtained in Example 1, followed by melt kneading by means of a biaxial extruder at 260°C for a residence time of 3 minutes to obtain pellets d of the grafted fluorine-containing copolymer composition a having an organic peroxide and a compound to be grafted blended and subjected to a heat treatment. By using the pellets d, a three-layer coextruded laminated sheet was formed in the same manner as in Example 1. The thicknesses of the ETFE layer, the grafted fluorine-containing copolymer composition a layer and the nylon 6 layer were 0.2 mm, 0.1 mm and 0.7 mm, respectively.

The peel strength between layers was measured in the same manner as in Example 1. The grafted fluorine-containing copolymer composition a layer and the electrically conductive ETFE layer could not be separated off, they underwent partial material breakage and showed a high adhesive force. The peel strength between the grafted fluorine-containing copolymer composition a layer and the nylon 6 layer was 35.5 N/cm.

The obtained three-layer laminated tube was soaked in CE10 (an alcohol mixed fuel of isooctane/toluene/ethanol in a volume% of 45/45/10) at 60°C for 240 hours. After the soaking, the peel strength between layers was measured. The grafted fluorine-containing copolymer composition a layer and the electrically conductive ETFE layer were not separated off and showed a high adhesive force. The peel strength between the grafted fluorine-containing copolymer composition a layer and the nylon 6 layer was 34.5 N/cm.

From the above results, it is found that the fluorine-containing copolymer of the present invention can be coextruded with another fluorine-containing polymer or a non-fluorine type polymer, has excellent adhesive properties and provides a laminate having a good crack resistance.

The entire disclosure of Japanese Patent Application No. 2001-55222 filed on February 28, 2001 including specification, claims and summary are incorporated herein by reference in its entirety.

## Claims

1. A fluorine-containing copolymer containing polymer units (A) based on tetrafluoroethylene or chlorotrifluoroethylene, polymer units (B) based on ethylene, polymer units (C) based on vinyl acetate and polymer units (D) based on a compound represented by the general formula CH₂=CX(CF₂)ₙY wherein each of X and Y which are independent of each other, is a hydrogen atom or a fluorine atom, and n is an integer of from 2 to 10, wherein (A)/(B) is from 20/80 to 80/20 in a molar ratio, (C)/((A)+(B)) is from 1/1,000 to 15/100 in a molar ratio, (D)/((A)+(B)) is from 1/1,000 to 15/100 in a molar ratio, and the volumetric rate of flow is from 1 to 1,000 mm³/sec.

2. The fluorine-containing copolymer according to Claim 1, wherein in the general formula CH₂=CX(CF₂)ₙY, X is a hydrogen atom and Y is a fluorine atom.

3. The fluorine-containing copolymer according to Claim 1 or 2, wherein (A)/(B) is from 50/50 to 70/30 in a molar ratio, (C)/((A)+(B)) is from 1/100 to 1/10 in a molar ratio, and (D)/((A)+(B)) is from 1/1,000 to 3/100 in a molar ratio.

4. The fluorine-containing copolymer according to Claim 1, 2 or 3, wherein the volumetric rate of flow is from 10 to 500 mm³/sec.

5. A fluorine-containing copolymer composition which is obtained by blending from 0.01 to 10 parts by mass of an organic peroxide with 100 parts by mass of the fluorine-containing copolymer as defined in anyone of Claims 1 to 4, followed by a heat treatment.

6. A grafted fluorine-containing copolymer composition which is obtained by blending from 0.01 to 10 parts by mass of an organic peroxide and from 0.01 to 100 parts by mass of a compound having a bonding group capable of being grafted and a functional group imparting adhesive properties, with 100 parts by mass of the fluorine-containing copolymer as defined in anyone of Claims 1 to 4, followed by a heat treatment.

7. A grafted fluorine-containing copolymer composition which is obtained by blending from 0.01 to 5 parts by mass of an organic peroxide and from 0.01 to 10 parts by mass of a compound having a bonding group capable of being grafted and a functional group imparting adhesive properties, with 100 parts by mass of the fluorine-containing copolymer as defined in anyone of Claims 1 to 4, followed by a heat treatment.

8. A laminate which comprises a layer of the fluorine-containing copolymer composition as defined in Claim 5 or the grafted fluorine-containing copolymer composition as defined in Claim 6 or 7 and a layer of a non-fluorine type polymer.

9. The laminate according to Claim 8, wherein the non-fluorine type polymer is polyamide 6, polyamide 66, polyamide 46, polyamide 11, polyamide 12 or polyamide MXD6.
